# EUROPÄISCHE PATENTSCHRIFT

(11) **EP 1 020 607 B1**
(45) Veröffentlichungstag und Bekanntmachung des Hinweises auf die Patenterteilung: **07.12.2005**
(21) Anmeldenummer: 00100835.8
(22) Anmeldetag: 17.01.2000
(51) Int. Cl.: E06B 3/02, E05D 5/02, E06B 3/54, B32B 17/10

(54) **Beschlag für ein rahmenloses Glaselement**
Fitting for a frameless glazing element
Ferrure pour un élément de vitrage sans cadre

(30) Priorität: 16.01.1999 DE 19901513
(43) Veröffentlichungstag der Anmeldung: 19.07.2000
(73) Patentinhaber: GEZE GmbH, 71229 Leonberg (DE)
(72) Erfinder: Renoth, Franz, 83471 Schönau am Königssee (DE); Hüser, Andreas, 83471 Schönau am Königssee (DE)

(56) Entgegenhaltungen:
- WO-A-96/22443
- DE-U- 8 800 333
- FR-A- 2 732 730
- US-A- 2 609 069

## Beschreibung

Die Erfindung betrifft ein Glaselement mit einem Beschlag entsprechend dem Oberbegriff des Patentanspruchs 1.

In der US-A-2,609,069 ist ein Glaselement mit einem Beschlag für eine Befestigungseinrichtung für einen Glasflügel nach dem Oberbegriff des Anspruchs 1 gezeigt. Zur Befestigung des Beschlags ist eine in einer Bohrung des Glasflügels, bereits zwischen den Scheiben festgelegte Haltebuchse vorgesehen, wobei Befestigungsschrauben die Beschlagteile mit der Haltebuchse verbinden.

Aus der FR 2 732 730 A1 ist ein Glasflügel mit einer Befestigungseinrichtung bekannt, bei der zwei Buchsen von gegenüberliegenden Seiten aus in eine Flügelbohrung eingreifen, und diese miteinander verschraubt sind. An keiner der Buchsen ist die Verschraubung eines Beschlagteils vorgesehen

Die Verbindung von rahmenlosen Glaselementen mit einem Bauteil ist oftmals problematisch, da die Befestigungsstelle am Glaselement möglichst keinerlei Relativbewegung, auch über einen langen Zeitraum, aufweisen darf, denn die Glaselemente dürfen sich nicht gegenüber dem Bauteil setzen, an dem sie gehalten werden. Im feststehenden Bauteil, das beispielsweise durch einen Türrahmen oder eine Mauer gebildet ist, sind feststehend angeordnete Glaselemente hinsichtlich der Anbringung einer Befestigungseinrichtung unproblematischer, weil üblicherweise auf diese keine so hohen Kräfte einwirken wie auf bewegbar, z.B. drehbar, schwenkbar oder verschiebbar im Bauteil angeordnete Glaselemente.

Besonders Glaselemente, sogenannte Sicherheitsglaselemente, die aus thermisch vorgespannten Glasscheiben bestehen, besitzen eine Druckeigenspannung an der Oberfläche, wodurch sie eine gute Schlagfestigkeit aufweisen und im Falle eines Bruches nicht mehr in große, scharfkantige Scherben, sondern in kleine, stumpfkantige Glaskrümel zerfallen. Für bestimmte Anwendungsfälle wird beim Zweischeiben-Sicherheitsglas eine zähelastische Folie zwischen den Glasscheiben angeordnet bzw. beim Einscheiben-Sicherheitsglas eine zähelastische Folie aufgeklebt, damit beim Bruch des Glaselements die einzelnen Glaskrümel zusammengehalten werden. Dies bedeutet, dass das Glaselement beim Bruch nicht in sich zusammenfällt, sondern die verglaste Öffnung verschlossen bleibt.

Eine Aufgabe der vorliegenden Erfindung ist es, ein Glaselement mit einem Beschlag zu schaffen, der eine Befestigungseinrichtung für ein vorzugsweise rahmenloses Glaselement aufweist, die eine feste und auch über einen langen Zeitraum einwandfreie und unverrückbare Verbindung mit dem Glaselement gewährleistet.

Diese Aufgabe wird durch den Anspruch 1 gelöst.

Eine einwandfreie Verbindung zwischen dem Beschlag und dem Glaselement wird dadurch erhalten, dass die Befestigungseinrichtung an am Glaselement ausgebildeten Angriffsflächen angreift, welche frei von elastischer Folie ausgebildet sind. Durch das direkte Angreifen der Befestigungseinrichtung an der harten Glasoberfläche wird eine elastische Verformung der elastischen Folie und somit ein Verschieben der Befestigungseinrichtung am Glaselement mit Sicherheit vermieden.

Eine einfache und leicht zu montierende Anordnung der Befestigungseinrichtung auf dem Glaselement wird merkmalsgemäß geschaffen, indem die Befestigungseinrichtung mit dem Glaselement eine Klemmverbindung bildet, wobei an mindestens einer der Glasscheiben zwei Angriffsflächen angeordnet sind. Diese Klemmverbindung der Befestigungseinrichtung mit dem Glaselement wird entsprechend einem Merkmal der Erfindung insbesondere reib- und/oder formschlüssig ausgebildet. Es ist jedoch auch eine Klebeverbindung möglich, die dann vorzugsweise mit einer formschlüssigen Verbindung kombiniert wird, damit einerseits eine gute Abdichtung an der Befestigungsstelle geschaffen wird und andererseits die unverrückbare Verbindung der Befestigungseinrichtung mit dem Glaselement gewährleistet ist. Die nur reibschlüssige Klemmverbindung weist plane Angriffsflächen der Glasscheibe auf, die mit entsprechenden und diesen Angriffsflächen angepassten Gegenflächen der Befestigungseinrichtung zusammengespannt sind. Eine derartige rein reibschlüssige Klemmverbindung ist insbesondere für Glaselemente mit relativ geringem Gewicht und/oder bei feststehenden Glaselementen anwendbar, auf die keine größeren äußeren Kräfte einwirken.

Bevorzugt wird eine Klemmverbindung so ausgebildet, dass bei einem Glaselement aus mehreren Glasscheiben mit mindestens einer zwischengeschalteten elastischen Folie an nur einer Glasscheibe mindestens zwei Angriffsflächen oder an mehreren Glasscheiben jeweils mindestens zwei Angriffsflächen ausgebildet sind. Die Angriffsflächen der Glasscheiben für die Klemmverbindung werden durch mechanische oder chemische Einwirkung von der elastischen Folie befreit, sofern sie nicht bereits bei der Herstellung des Glaselements entsprechend ausgebildet sind.

Bei einer vorteilhaften Ausführungsform sind an zwei Glasscheiben, die über eine zwischengeschaltete Folie verbunden sind, jeweils mindestens zwei Angriffsflächen angeordnet, wobei zwischen den Glasscheiben ein die Folie möglieherweise entlastendes Distanzelement geschaltet ist, an dem jeweils mindestens eine oder zwei Angriffsflächen ausgebildet sind oder angreifen. Ein solches Distanzelement wird vorteilhafterweise bei der Herstellung des Glaselements unverlierbar eingebaut und kann je nach Ausführung entweder fest mit der einen Glasscheibe oder mit der anderen Glasscheibe oder mit beiden Glasscheiben verbunden werden. Die Angriffsflächen an den gegenüberliegenden Seiten der Glasscheibe können beispielsweise so vorgesehen sein, dass sie als mindestens zwei zur Glasfläche plane Angriffsflächen oder als zwei zur Glasfläche schräge Angriffsflächen oder als eine zur Glasfläche plane und eine zur Glasfläche schräge Angriffsfläche ausgebildet sind. Entsprechend kann erfindungsgemäß die Befestigungseinrichtung zu den Angriffsflächen komplementäre Befestigungsflächen aufweisen, welche über eine Spanneinrichtung, vorzugsweise mit einer Schraubverbindung, zueinander verspannbar sind. Die schräg zur Oberfläche der Glasscheibe verlaufenden Angriffsflächen können beliebig ausgeführt sein, beispielsweise als quadratische, rechteckige oder ovale Vertiefungen.

Eine im Aufbau einfache Ausführungsform wird erhalten, wenn die formschlüssige Klemmverbindung eine Aussparung in der tragenden Glasscheibe aufweist und zwischen der Aussparung und der planen Glasfläche wenigstens eine schräge Innenfläche angeordnet ist, die mit einer komplementären schrägen Außenfläche eines Teils der Befestigungseinrichtung zusammenwirkt. Diese Aussparung kann beliebig geformt sein, beispielsweise als Bohrung oder als Rechteck, insbesondere Quadrat. Bei quadratischer Ausbildung ist ein entsprechend ausgeführtes Befestigungsteil unverdrehbar in dieser Aussparung angeordnet.

Für eine Ausführungsform der Beschlagbefestigung an dem Glaselement ist, entsprechend einem Merkmal der Erfindung, die tragende Glasscheibe größer ausgebildet als die nichttragende Glasscheibe und weist von elastischer Folie befreite Angriffsflächen auf, welche die Klemmflächen für einen Klemmschuh bilden.

Auch diese Klemmverbindung kann problemlos mit schräg zur planen Glasfläche verlaufenden, durch Vertiefungen oder Durchbrechungen gebildete Angriffsflächen kombiniert werden, in die entsprechende Vorsprünge des Klemmschuhs eingreifen, wodurch eine zusätzliche formschlüssige Verbindung für diese Befestigungseinrichtung geschaffen wird.

Eine einfache, formschöne und besonders dauerhafte Verbindung der Befestigungseinrichtung mit dem tragenden Glaselement wird erfindungsgemäß dadurch geschaffen, dass die Befestigungseinrichtung aus einer oder mehreren, vorzugsweise aus zwei Befestigungsinseln besteht, die in Aussparungen des Glaselements angeordnet sind. Bei diesen Befestigungsinseln handelt es sich um eine Befestigungseinrichtung, die in eine inmitten des Glaselements angeordneten Aussparung, vorzugsweise Bohrung, eingesetzt ist und in dieser Position mit den Glasscheiben verankert ist. Die Befestigungsinseln dienen dazu, weitere Beschlagteile am Glaselement zu befestigen, d.h. sie sind zur festen Verankerung weiterer Beschlagteile ausgebildet. Jede Befestigungsinsel besteht aus mindestens zwei Bauteilen, die mit den Angriffsflächen der tragenden Glasscheibe zusammenwirken. Auf einfache Weise wird die Klemmverbindung erreicht, wenn jede Befestigungsinsel zwei Schraubflansche aufweist, die miteinander verbindbar ausgebildet sind. Anstelle der Schraubflansche können auch nietähnliche Flansche vorgesehen werden, die durch Zusammenpressen eine Befestigungsinsel bilden.

Insbesondere bei Verbundsicherheitsglaselementen, die aus zwei Glasscheiben mit dazwischen angeordneter elastischer Folie bestehen, wird entsprechend einem weiteren Merkmal der Erfindung jeder Befestigungsinsel eine Gewindehülse zugeordnet, die mit einem eine Andrückfläche bildenden Befestigungsbund versehen und mit den Schraubflanschen verbindbar ist. Verschiedene Ausführungen der Befestigungseinrichtung werden nach der Erfindung dadurch geschaffen, dass die Gewindehülse als Distanzelement ausgebildet ist, bei der Herstellung des Glaselements unverlierbar eingebracht wird und mit dem Befestigungsbund in einen von den beiden Glasscheiben begrenzten Freiraum ragt, der frei von elastischer Folie ausgebildet ist. Ferner ist der Befestigungsbund der Gewindehülse der Form der Angriffsfläche der Glasscheibe angepasst und ist wahlweise gegen die eine oder die andere Glasscheibe oder gegen beide Glasscheiben klemmbar ausgebildet.

Eine weitere sehr vorteilhafte Konstruktion der Befestigungseinrichtung wird merkmalsgemäß dadurch geschaffen, dass bei einem Glaselement mit einer tragenden Glasscheibe und einer nichttragenden Glasscheibe die tragende Glasscheibe eine als Senkbohrung ausgebildete Aussparung mit kleinerem Durchmesser aufweist als die Bohrung der nichttragenden Glasscheibe und der Befestigungsbund der Gewindehülse gegen die dadurch gebildete Angriffsfläche oder gegen eine kegelstumpfförmige Innenfläche mittels des Schraubflansches gepresst wird, während der andere Schraubflansch im wesentlichen nur zur Aufnahme eines Beschlagteils des Beschlags angeordnet ist. Die Bohrung der nichttragenden Glasscheibe begrenzt zusammen mit Teilen der Befestigungseinrichtung einen Freiraum, in den vor der Verbindung des zweiten Schraubflansches mit der Gewindehülse ein vorzugsweise elastischer Werkstoff eingebracht wird, damit eine absolute Dichtheit an dieser Stelle gewährleistet ist.

Da die Komponenten der Befestigungseinrichtung vorzugsweise aus einem harten metallischen Werkstoff hergestellt sind und die Metallflächen einiger Komponenten die Glasoberfläche bei der Montage und/oder bei auf das Glaselement wirkenden Kräften beschädigen würden, sind erfindungsgemäß zwischen den Angriffsflächen der Glasscheiben und den mit diesen Angriffsflächen korrespondierenden Flächen der Schraubflansche und der Gewindehülse Formbuchsen bzw. Andrückscheiben angeordnet, die aus relativ unelastischen, die Angriffsfläche der Glasscheibe auch bei Druckspannung nicht beschädigenden Werkstoffen, vorzugsweise aus einem harten Kunststoff bestehen. Die Formbuchsen und Andrückscheiben verhindern also einen direkten Kontakt zwischen den metallischen Komponenten der Befestigungsinsel und den Angriffsflächen des Glaselements, stellen jedoch gleichzeitig aufgrund ihrer Unelastizität eine sichere, unbewegbare Fixierung des Beschlags an dem Glaselement sicher.

In weiterer Ausgestaltung der Erfindung ist das Beschlagteil im Bereich jeder Befestigungsinsel mit einer gegenüber dem Gewindeaußendurchmesser einer Befestigungsschraube größeren Bohrung versehen, wodurch bei der Verbindung des Beschlagteils mit dem Glaselement eine einfache und wirkungsvolle Justiermöglichkeit für den Beschlag relativ zum Glaselement und außerdem ein Ausgleich der Fertigungstoleranzen geschaffen wird.

Das Glaselement kann verschiedenartig aufgebaut sein; z.B. kann das Glaselement aus einer Glasscheibe ohne oder mit Folienbeschichtung oder aus mehreren Glasscheiben mit zwischengeschalteten Folien bestehen. Dadurch, dass im Bereich der Befestigungseinrichtung keine Folie angeordnet ist bzw. die Folie entfernt ist, wird die mit der Befestigungseinrichtung verbundene Glasscheibe zu einer tragenden Glasscheibe. Das Glaselement weist also mindestens eine tragende Glasscheibe sowie gegebenenfalls zusätzlich eine oder mehrere nichttragenden Glasscheiben auf.

Ebenso wird entsprechend der Erfindung eine vorteilhafte Konstruktion dadurch geschaffen, dass das Glaselement zwei Glasscheiben mit unterschiedlicher Stärke aufweist, wobei die Klemmverbindung für den Beschlag vorzugsweise an der stärkeren Glasscheibe angeordnet ist. Auch die Verbindung zwischen der Befestigungseinrichtung und den restlichen Beschlagteilen erfolgt auf einfache Weise dadurch, dass jeder Schraubflansch mit einem zentral angeordneten Innengewinde versehen ist, in das eine Befestigungsschraube für die Beschlagteile eingreift. Gegen das eventuelle Lösen der zwischen dem Glaselement und dem Beschlag vorhandenen Schraubverbindungen können die bekannten Schraubsicherungen angewendet werden, z.B. Klebesicherungen.

Entsprechend weiteren Merkmalen der Erfindung werden die Befestigungsinseln und die übrigen Beschlagteile so ausgebildet, dass die Beschläge einstellbar sind und auch in um 180° gedrehter Lage montiert werden können. Ferner ist vorzugsweise zwischen dem Beschlagteil und dem Glaselement eine Dichtung angeordnet, wodurch ein Eindringen von Schmutz oder Reinigungsmittel beim Säubern des Glaselements vermieden wird.

Der Beschlag kann als Bausatz angeboten werden. Ein wesentlicher Vorteil besteht darin, dass bei bevorzugten Ausführungen der Befestigungseinrichtung des Beschlags die Komponenten der Befestigungseinrichtung modular ausgebildet sind. Dies bedeutet, dass viele der Komponenten universell für alle denkbaren Anwendungen einsetzbar sind, d.h. z.B. sowohl für Verbundsicherheitsglas- als auch für Einscheibenglaselemente. Die einzige Komponente, welche spezifisch für die jeweilige Anwendung, d.h. entweder für Verbundsicherheitsglaselemente oder für Einscheibenglaselemente, ausgebildet ist, ist die Gewindehülse, wobei aber auch hier bei jeder Gewindehülse die Stärke des Glaselements in gewissem Maße variieren kann.

Durch diese modulare Ausgestaltung lässt sich die Anzahl der Komponenten für die gesamte Produktpalette der Befestigungseinrichtung deutlich reduzieren, was zu Kostenvorteilen, bei Entwicklung, Herstellung und Lagerhaltung führt.

Anhand der in der Zeichnung dargestellten Ausführungsformen wird nachfolgend die Erfindung näher erläutert. Es zeigt:
- **Figur 1**: einen Ausschnitt einer Türanlage mit einem Festfeldflügel und einem bewegten Flügel;
- **Figur 2**: einen Schnitt durch ein mit einer elastischen Folie beschichtetes Glaselement und eine Befestigungsinsel;
- **Figur 3**: eine Verbindung einer Befestigungsinsel mit einem Verbundsicherheitsglaselement im Schnitt;
- **Figur 4**: eine Ausführungsform, bei der ein Distanzelement einer Gewindehülse zwischen den Glasscheiben eines Verbundsicherheitsglaselements eingebracht ist;
- **Figur 5**: eine gegenüber Figur 4 geänderte Form des Distanzelements der Gewindehülse;
- **Figur 6**: eine weitere Ausführungsform einer mit einem Verbundsicherheitsglaselement verbundenen Befestigungsinsel;
- **Figur 7**: eine Anordnung der Befestigungsinsel an einem Verbundsicherheitsglaselement mit unterschiedlicher Stärke der Glasscheiben;
- **Figur 8**: eine Anordnung entsprechend Figur 7 mit montiertem Beschlagteil;
- **Figur 9**: eine Anordnung der Befestigungsinsel an einem Einschiebenglaselement mit dünner Glasscheibe;
- **Figur 10**: eine Anordnung entsprechend Figur 9 mit einer stärkeren Glasscheibe;
- **Figur 11**: eine Gewindehülse einer Befestigungsinsel zur Verwendung bei einem Verbundsicherheitsglaselement mit gleich starken Scheiben;
- **Figur 12**: eine Gewindehülse einer Befestigungsinsel zur Verwendung bei einem Verbundsicherheitsglaselement mit unterschiedlich starken Scheiben;
- **Figur 13**: eine Gewindehülse einer Befestigungsinsel zur Verwendung bei einem Einschiebenglaselement mit dünner Glasscheibe;
- **Figur 14**: eine Gewindehülse einer Befestigungsinsel zur Verwendung bei einem Einschiebenglaselement mit gegenüber Figur 13 stärkerer Glasscheibe;
- **Figur 15**: eine Formbuchse einer Befestigungsinsel zur universellen Verwendung;
- **Figur 16**: ein Schraubflansch einer Befestigungsinsel zur universellen Verwendung;
- **Figur 17**: eine Andrückscheibe einer Befestigungsinsel zur universellen Verwendung;
- **Figur 18**: eine Befestigungsschraube einer Befestigungsinsel zur universellen Verwendung;
- **Figur 19**: eine zerlegte Anordnung entsprechend Figur 8 unter Verwendung der Komponenten entsprechend der Figuren 12, 15, 16, 17 und 18.

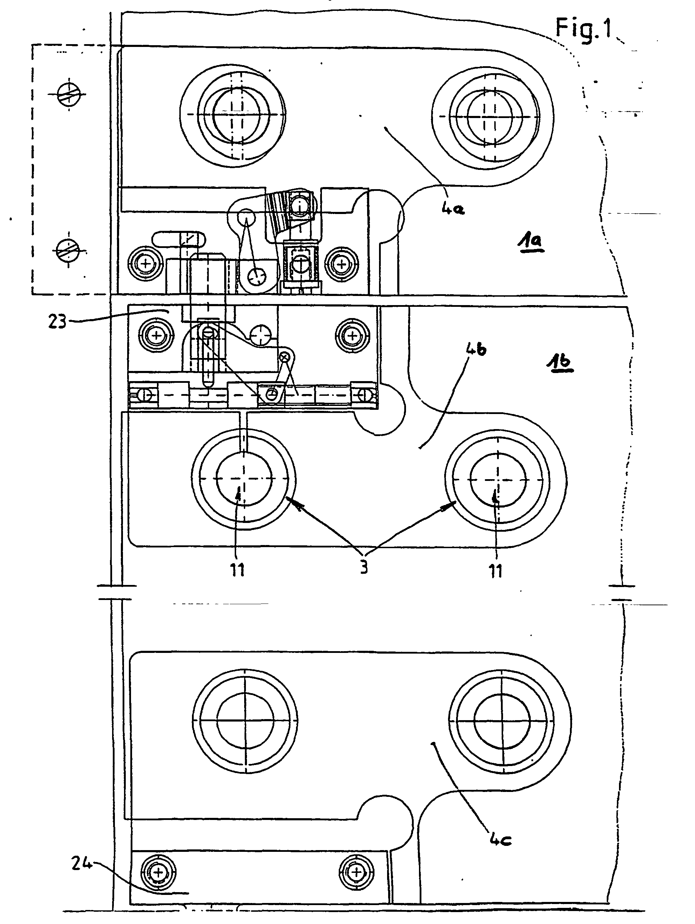

In **Figur 1** ist ein oberes Glaselement 1a als ein mit einem Türrahmen oder mit einer Mauer verbundener Festfeldflügel dargestellt, und ein unteres Glaselement 1b bildet eine Drehtür. Diese Glaselemente 1a, 1b sind rahmenlos ausgeführt, wobei jeweils Beschlagteile 4a, 4b, 4c der Beschläge mit ihren Befestigungseinrichtungen 3 einerseits fest mit den Glaselementen 1a, 1b und andererseits entweder mit dem Türrahmen verbunden sind, oder sie greifen über ein oberes Türlager 23 mit einem Drehzapfen in ein vom Beschlag des Festfeldflügels gebildetes Drehlager und mit dem Drehzapfen des unteren Türlagers 24, beispielsweise in einen Bodentürschließer, ein. Wesentlich ist, dass alle Beschlagteile 4a, 4b, 4c mit den Glaselementen 1a,1b fest verbunden sind, wobei die Beschläge für die verschiedensten Anwendungsfälle ausgebildet sein können, z.B. als Dreh-, Schiebe-, Pendel- oder Kippbeschläge für Türen oder Fenster. Um eine einwandfreie Funktion insbesondere der schwenkbaren Flügel zu gewährleisten, müssen die Befestigungseinrichtungen 3 eine unverrückbare Verbindung mit den Beschlägen bilden, und es werden vorzugsweise jedem Beschlagteil 4a, 4b, 4c zwei Befestigungsinseln 11 zugeordnet.

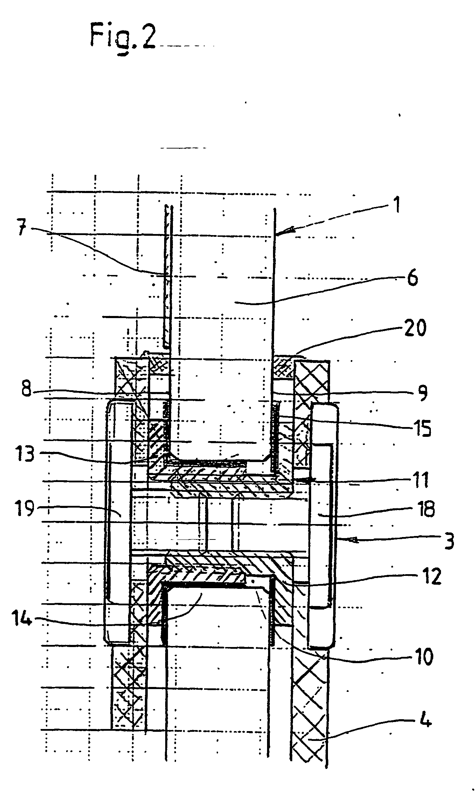

Die **Figur 2** zeigt eine als Befestigungsinsel 11 ausgebildete Befestigungseinrichtung 3, die fest mit einem Glaselement 1 verbunden ist. Das Glaselement 1 ist ein Einscheiben-Sicherheitsglas, das aus einer tragenden Glasscheibe 6 mit aufgeklebter elastischer Folie 7 besteht. Die Befestigungsinsel 11 weist einen ersten Schraubflansch 12 mit einem Innen- und einem Außengewinde und einen zweiten Schraubflansch 13 mit einem Innengewinde auf. Im Bereich einer Angriffsfläche 8 ist die Oberfläche der Glasscheibe 6 frei von elastischer Folie 7 ausgebildet, so dass sowohl die Formbuchse 14 als auch die Andrückscheibe 15 direkt auf den planen Angriffsflächen 8 und 9 aufliegen. Zur Bildung der Befestigungsinsel 11 ist die Glasscheibe 6 mit einer als Bohrung ausgebildeten Aussparung 10 versehen, in die der mit der Formbuchse 14 versehene Schraubflansch 14 eingeschoben und dann mit dem Schraubflansch 12 fest verschraubt wird. Diese Schraubverbindung wird vorteilhafterweise mit einem vorgegebenen Drehmoment ausgeführt und gegen Lösen gesichert. Die Befestigung des Beschlagteils 4 erfolgt mit den Befestigungsschrauben 18 und 19, die in das Innengewinde des Schraubflansches 12 eingeschraubt werden. Zum Ausgleich der Fertigungstoleranzen und zur Justierung sind die Bohrungen des Beschlagteils 4, durch welche die Befestigungsschrauben 18 und 19 greifen, größer ausgebildet als die Außengewinde dieser Befestigungsschrauben. Zwischen dem Beschlagteil 4 und dem Glaselement 1 ist noch eine Dichtung 20 vorgesehen, welche die Innenteile des Beschlagteils vor Verschmutzung schützt und vorteilhaft bei der Reinigung des Glaselement ist.

Das in Figur 2 dargestellte Beschlagteil 4 kann in gleicher Weise an Glaselemente 1 mit einer oder mehreren Scheiben 5, 6, die keine Folienbeschichtung 7 oder keine zwischengeschaltete elastische Folie 7 aufweisen, eingesetzt werden.

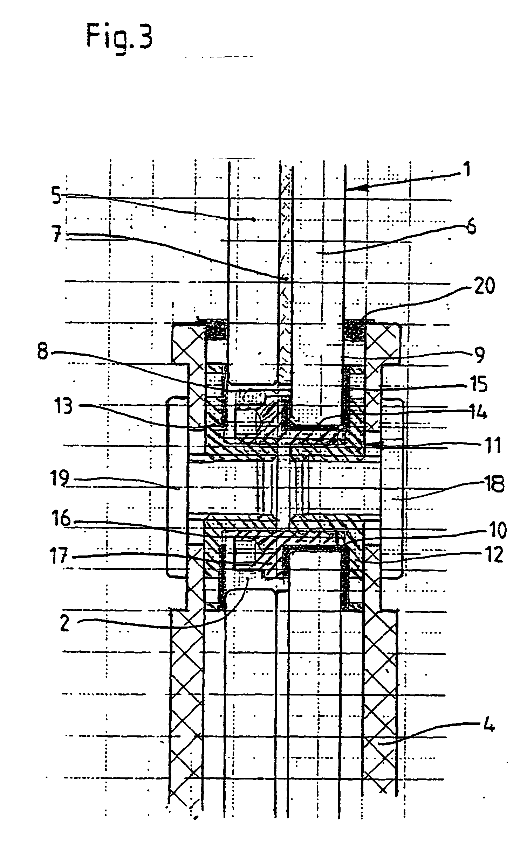

Die Befestigungsinsel 11 aus diesem Ausführungsbeispiel erlaubt in gewissem Rahmen eine Variation der Stärke der Scheibe 6, wobei die Schraubflansche 12, 13 und die Befestigungsschrauben 18, 19 unverändert verwendbar sind. Dasselbe gilt für das Ausführungsbeispiel gemäß Figur 3, wo unter Verwendung derselben Schraubflansche 12, 13 und Befestigungsschrauben 18, 19 noch größere

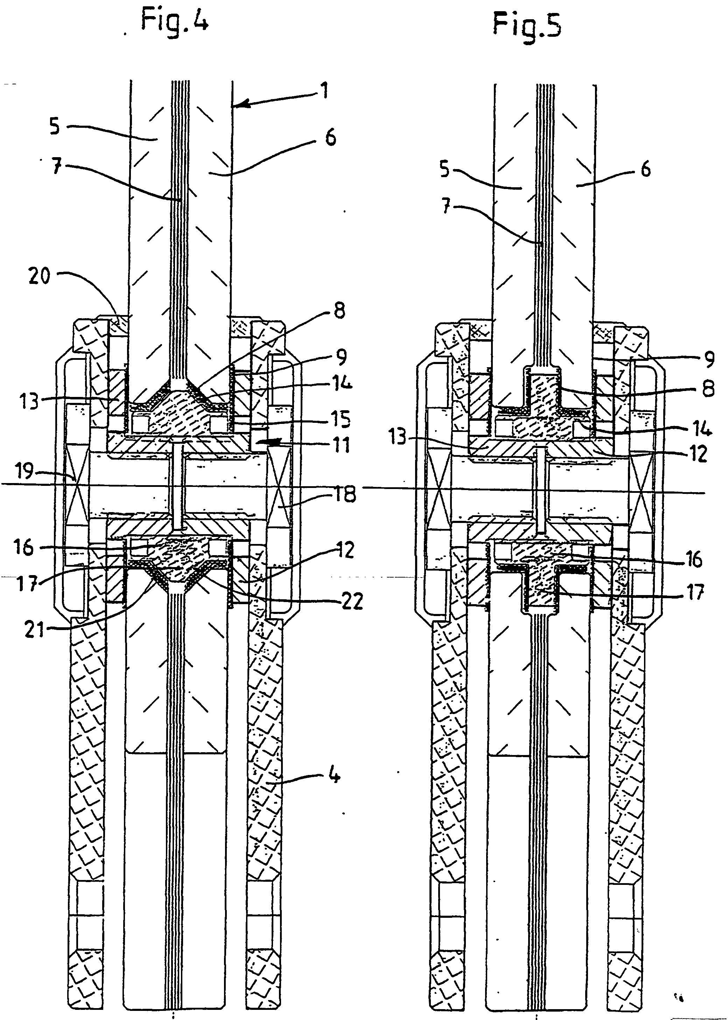

Stärken der Scheiben 5, 6 und/oder der Folie 7 realisierbar sind. Ein Einsatz von Scheiben 5, 6 und/oder Folien 7 mit größerer bzw. kleinerer Stärke abweichend von den dargestellten Ausführungsbeispielen der Figur 4 bis 7 ist möglich.

Die in **Figur 3** dargestellte Ausführungsform zeigt ein Glaselement 1, das eine nichttragende Glasscheibe 5 und eine tragende Glasscheibe 6 aufweist, wobei die beiden Glasscheiben 5 und 6 durch eine zwischengeschaltete elastische Folie 7 miteinander verbunden sind. Zur Verbindung des Beschlagteils 4 mit dem Glaselement 1 sind mindestens zwei der in der Figur gezeigten Befestigungsinseln 11 vorgesehen. Die nichttragende Glasscheibe 5 ist zur Aufnahme einer Gewindehülse 16 mit einer größeren Bohrung versehen als die durch die Aussparung 10 gebildete Bohrung in der tragenden Glasscheibe 6. Die Gewindehülse 16 besitzt einen Befestigungsbund 17 und ist mit einem Innengewinde versehen, in das die identisch ausgebildeten Schraubflansche 12 und 13 mit ihren Außengewinden eingreifen. Die tragende Glasscheibe 6 ist mit den frei von elastischer Folie 7 ausgebildeten Angriffsflächen 8 und 9 versehen, wobei die auf der Folienseite vorhandene erste Angriffsfläche 8 über eine Formbuchse 14 auf die von dem Befestigungsbund 17 der Gewindehülse 16 gebildete Befestigungsfläche wirkt und der erste Schraubflansch 12 über eine Andrückscheibe 15 auf die zweite Angriffsfläche 9 einwirkt. Bei der Montage der Befestigungsinsel 11 wird zuerst die mit der Formbuchse 14 versehene Gewindehülse 16 in die Aussparung 10 eingeführt und dann mit dem die Andrückscheibe 15 tragenden ersten Schraubflansch 12 fest verschraubt, vorzugsweise mit einem vorgegebenen Drehmoment.

Von der Bohrung in der nichttragenden Glasscheibe 5 und der Gewindehülse 16 wird ein Freiraum 2 begrenzt, in den zur Schraubsicherung und Abdichtung beispielsweise vor dem Einschrauben des zweiten Schraubflansches 13 ein vorzugsweise hartelastischer Werkstoff eingebracht wird. Der hartelastische Werkstoff bewirkt in gewissem Maße einen Kraftschluss zwischen der Gewindehülse 16 und der nichttragenden Scheibe 5 sowie ferner eine zusätzliche Abdichtung der Befestigungsinsel 11. Der zweite Schraubflansch 13 wird mit einer Andrückscheibe gegen die erste Anlagefläche 8 geschraubt, jedoch mit geringem Drehmoment, damit keine zusätzliche Verspannung auf das Verbundsicherheitsglas ausgeübt wird. Zur Befestigung des Beschlagteils 4 sind zwei solcher Befestigungsinseln 11 mit dem Glaselement 1 verbunden. Im Flansch der Schraubflansche 12 und 13 sind Bohrungen vorgesehen, die zu den Angriffsflächen der Glasscheiben durch die Andrückscheiben 15 verschlossen sind, wodurch eine Berührung des Befestigungswerkzeugs mit der Glasoberfläche vermieden wird. Die Verbindung des Beschlagteils 4 mit den Befestigungsinseln 11 erfolgt an jeder Befestigungsinsel, wie bereits bei der Ausführungsform nach Figur 2 beschrieben, durch die beiden Befestigungsschrauben 18 und 19 unter Zwischenschaltung der Dichtung 20.

Bei einer weiteren Ausführungsform nach **Figur 4** ist eine Gewindehülse 16 mit einem vom Befestigungsbund 17 gebildeten Distanzelement in einem von den beiden Glasscheiben 5 und 6 begrenzten Freiraum angeordnet und wird bei der Herstellung des Glaselements unverlierbar eingebracht. Die Angriffsflächen 8 der Glasscheiben 5 und 6 weisen kegelstumpfförmige Innenflächen 21 auf, die frei von elastischer Folie 7 sind. Der als Distanzelement ausgebildete Befestigungsbund 17 der Gewindehülse 16 ist mit komplementären kegelstumpfförmigen Außenflächen 22 versehen, und zwischen den Innenflächen 21 und den Außenflächen 22 sind Formbuchsen 14 angeordnet. Zur Bildung der Befestigungsinsel 11 wird der erste Schraubflansch 12 in die Gewindehülse 16 eingeschraubt, wobei diese zum Gegenhalten mit einem Werkzeug mit Bohrungen versehen ist. Die Gewindehülse 16 und der Schraubflansch 12 werden mit einem vorgegebenen Drehmoment miteinander verspannt, wodurch die feste Verbindung mit der Glasscheibe 6 hergestellt wird. Es kann auch eine feste Verbindung mit der Glasscheibe 5 gebildet werden, wenn Schraubflansch 13 fest mit der Gewindehülse 16 verschraubt wird, oder es werden beide Glasscheiben 5 und 6 mit den Innenflächen 21 gegen die Außenflächen 22 des Befestigungsbunds verspannt. Die anschließende Verbindung des Beschlagteils 4 mit den Befestigungsinsel ist bereits bei den Ausführungsbeispielen nach den Figuren 2 und 3 mit entsprechenden Bezugszeichen beschrieben.

Die Ausführungsform nach **Figur 5** unterscheidet sich von der nach Figur 4 im wesentlichen dadurch, dass die unverlierbar mit dem Glaselement 1 verbundene Gewindehülse 16 mit einem Befestigungsbund 17 versehen ist, der ein im Schnitt rechteckiges Distanzelement bildet. Der übrige Aufbau und die Wirkungsweise sind in der Figur 4 beschrieben.

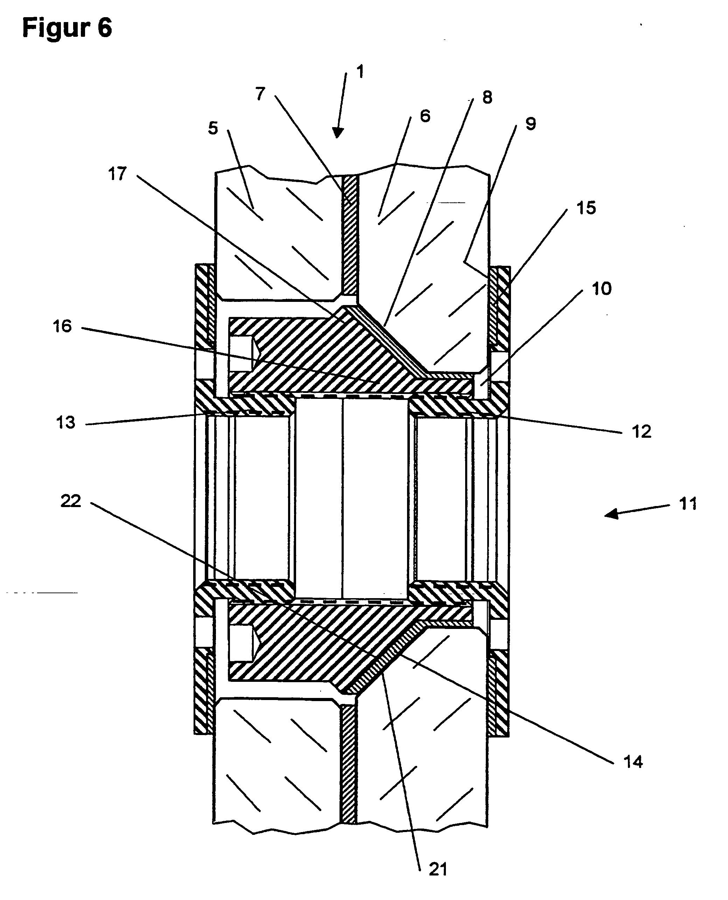

In den **Figuren 6** bis **19** werden besonders vorteilhafte Ausführungsbeispiele beschrieben:

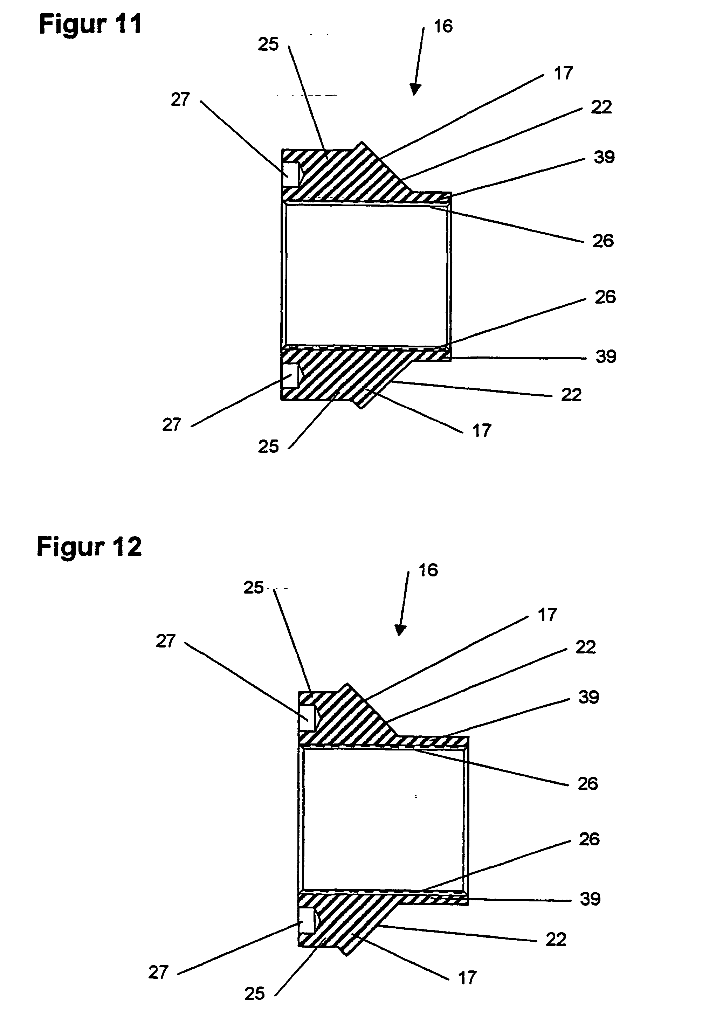

Bei der Konstruktion nach **Figur 6** ist zur Aufnahme der Befestigungsinsel 11 die tragende Glasscheibe 6 des Verbundsicherheitsglaselements 1 mit einer als Senkbohrung ausgebildeten Aussparung 10 versehen, die somit eine kegelstumpfförmige Innenfläche 21 aufweist, welche die frei von elastischen Folie 7 ausgeführte Angriffsfläche 8 bildet. Der Durchmesser der Bohrung der zweiten Glasscheibe 5 ist größer als der Durchmesser der Aussparung 10 der ersten Glasscheibe 6. Durch diese große Bohrung hindurch wird in die Aussparung 10 der tragenden Scheibe 6 eine Formbuchse 14 eingesetzt. Sie ist formschlüssig mit der kegelstumpfförmigen Innenfläche 21 der Aussparung 10 aus einem harten Material ausgebildet, z.B. aus Kunststoff, und schützt die Angriffsfläche 8 der tragenden Glasscheibe 6 vor direkter Berührung mit einer Gewindehülse 16, welche in die Formbuchse 14 ist formschlüssig eingesetzt ist; d.h. die Gewindehülse 16 weist einen Befestigungsbund 17 auf, der eine kegelstumpfförmige Außenfläche 22 aufweist, welche der kegelstumpfförmigen Innenfläche der Formbuchse 14 entspricht. Die Gewindehülse, welche in **Figur 11** noch näher beschrieben wird, weist ein Innengewinde auf, in welches von Seiten der tragenden Scheibe 6 ein Schraubflansch 12 eingeschraubt wird. Der Schraubflansch stützt sich mit seinem scheibenförmigen Bereich auf einer Andrückscheibe 15 ab. Die Andrückscheibe 15 ist ringförmig ausgebildet und besteht wie die Formbuchse 14 aus einem harten Material, welches die Angriffsfläche 9 der tragenden Glasscheibe 6 vor direkter Berührung mit dem Schraubflansch 12 schützt. Die Montage der Befestigungsinsel 11 erfolgt dadurch, dass die Gewindehülse 16 mit dem ersten Schraubflansch 12 fest verschraubt wird, wobei durch Anpressen der Formbuchse 14 gegen die erste kegelstumpfförmige Angriffsfläche 8 und durch Anpressen der Andrückscheibe 15 gegen die plane zweite Angriffsfläche 9 eine feste Verbindung dieser Teile 12, 16 mit der tragenden Glasscheibe 6 hergestellt wird. Durch die kegelstumpfförmigen korrespondierenden Flächen wird außerdem sichergestellt, dass sich die Befestigungsinsel zentriert und unbewegbar in dem Glaselement fixiert ist. Der zweite Schraubflansch 13 ist von Seiten der nichttragenden Glasscheibe 5 in das Innengewinde der Gewindehülse 16 eingeschraubt und befindet sich unter Zwischenschaltung einer zweiten Andrückscheibe 15 auf der planen Außenfläche der nichttragenden Glasscheibe 5 in Anlage. Dadurch, dass der zweite Schraubflansch nicht fest angezogen wird, wird die elastische Folie 7 zwischen den Scheiben 5, 6 nicht komprimiert, d.h. auf das Glaselement 1 wirkt keine Druckspannung. Die zweite Andrückscheibe 15 hat lediglich abdichtende Funktion

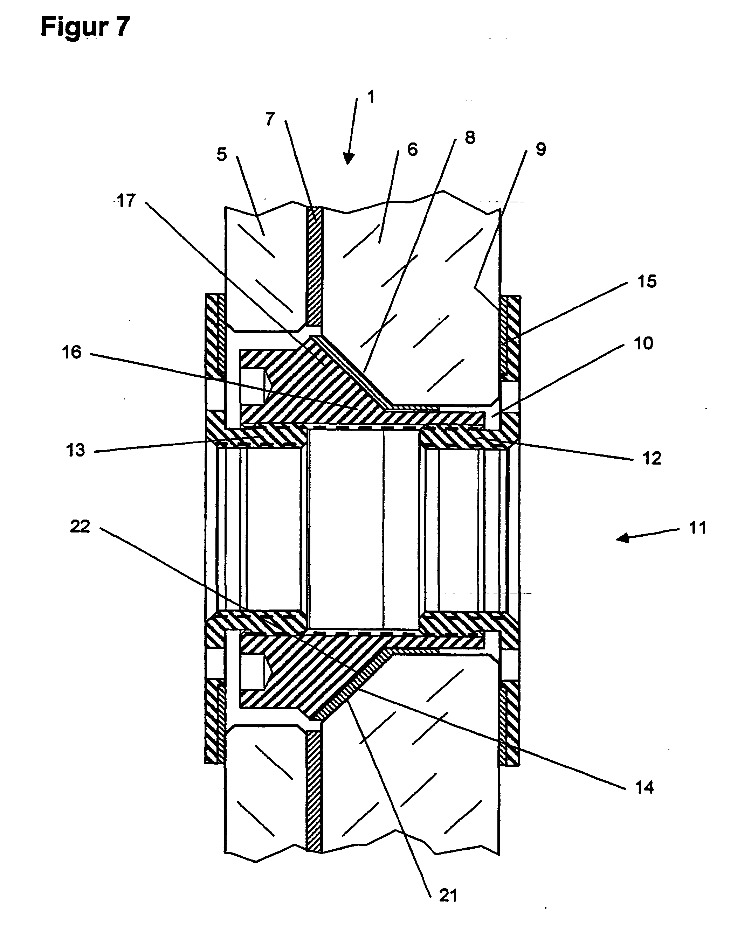

Das Ausführungsbeispiel nach **Figur 7** unterscheidet sich von dem Ausführungsbeispiel nach Figur 6 dadurch, dass die tragende Glasscheibe 6 des Glaselements 1 eine größere Stärke aufweist als die nichttragende Glasscheibe 5. Die Gewindehülse 16 ist entsprechend der Stärken der Glasscheiben 5, 6 gegenüber der Gewindehülse 16 aus dem Ausführungsbeispiel gemäß Figur 6 abgewandelt ausgebildet und wird bei **Figur 12** näher beschrieben.

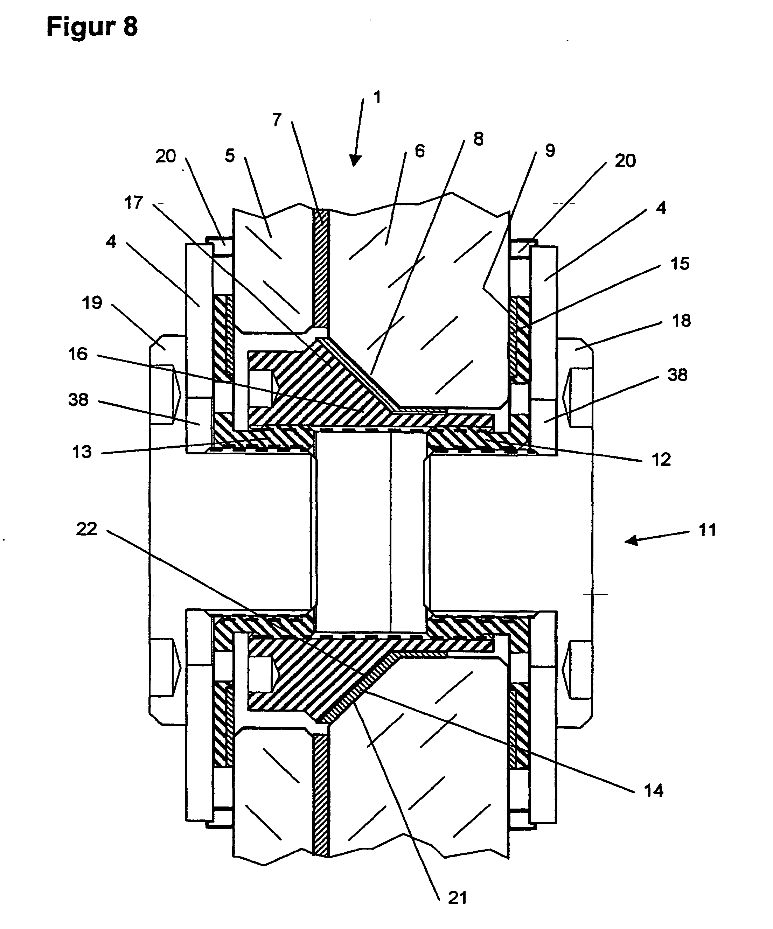

Bei dem Ausführungsbeispiel gemäß **Figur 8** ist mittels der Befestigungsschrauben 18, 19, welche in die Befestigungsinsel 11 eingeschraubt werden, ein Beschlagteil 4 an dem Glaselement 1 montiert. Glaselement 1 und Befestigungsinsel 11 entsprechen dem in Figur 7 gezeigten Ausführungsbeispiel. Die Befestigungsschrauben 18, 19 weisen jeweils ein Außengewinde auf, welche durch im Beschlagteil 4 befindliche Bohrungen 38 in entsprechende Innengewinde der Schraubflansche eingreifen. Dadurch, dass die Bohrungen 38 im Beschlagteil 4 größere Durchmesser aufweisen als die Schafte der Befestigungsschrauben 18, 19, besteht eine Justiermöglichkeit des Beschlagteils 4 gegenüber dem Glaselement 1. Das Beschlagteil 4 wird mittels der Befestigungsschrauben 18, 19 gegenüber den Schraubflanschen 12, 13 verspannt, d.h. das Beschlagteil hat keinen direkten Kontakt zum Glaselement 1. Der Kraftschluss erfolgt über die Gewindehülse 16 und die Schraubflansche 12, 13. Die Spalten zwischen dem Beschlagteil 4 und den Scheiben 5, 6 werden durch eine dort eingesetzte Dichtung 20 abgedichtet.

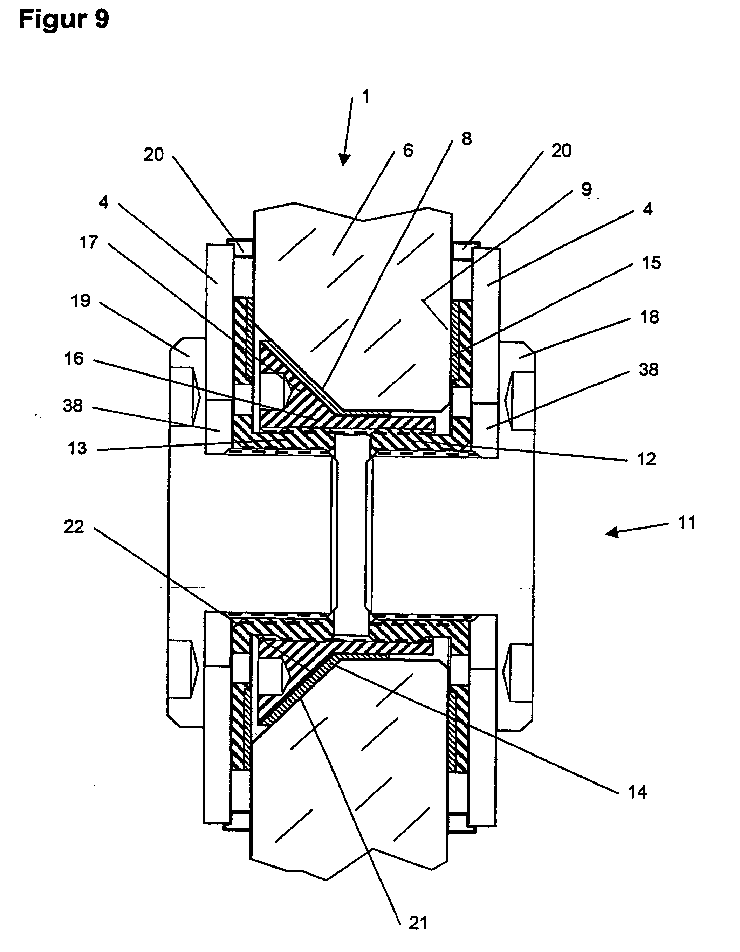

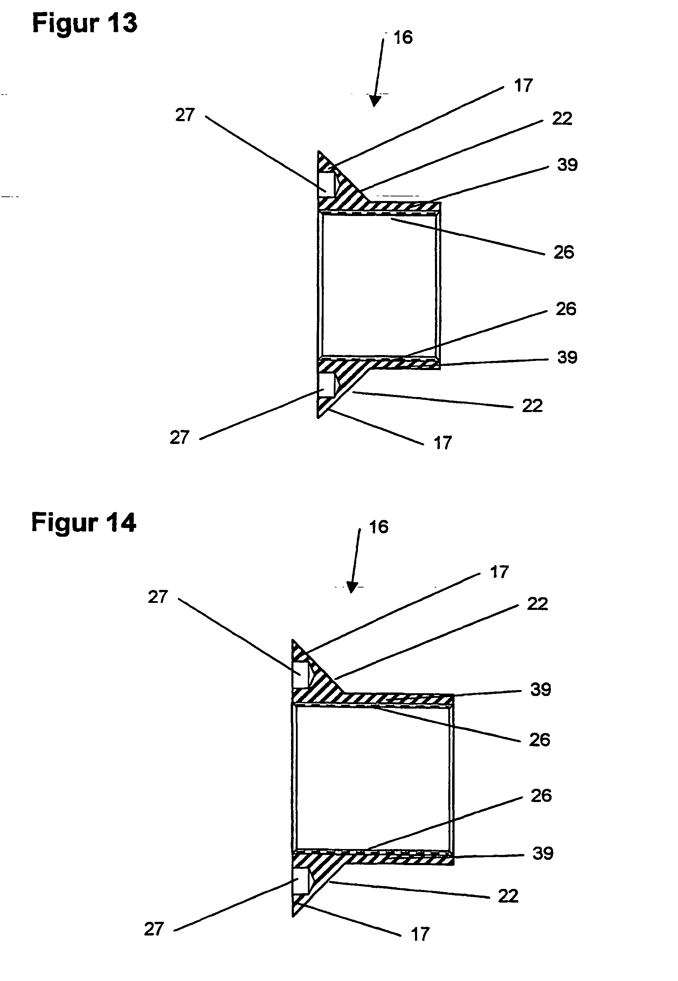

Das Ausführungsbeispiel nach **Figur 9** unterscheidet sich von dem Ausführungsbeispiel nach Figur 8 dadurch, dass das Glaselement 1 als Einscheibenglaselement ausgebildet ist. Die tragende Scheibe 6 ist ebenfalls mittels einer Gewindehülse 16, welche in das Glaselement 1 angepasst ausgebildet ist und bei **Figur 13** näher beschrieben wird, und eines ersten Schraubflansches 13 unter Zwischenschaltung einer Formbuchse 14 und einer ersten Andrückscheibe 15 verspannt. Dem ersten Schraubflansch 13 gegenüberliegend ist der zweite Schraubflansch 12 in die Gewindehülse 16 eingeschraubt, wobei zwischen dem zweiten Schraubflansch 12 und der Glasscheibe 6 eine zweite Andrückscheibe 15 angeordnet ist. Das Beschlagteil 4 ist, wie bei dem Ausführungsbeispiel gemäß Figur 8 beschrieben, mittels Befestigungsschrauben 18, 19 montiert und mittels Dichtungen 20 gegenüber der Glasscheibe 6 abgedichtet.

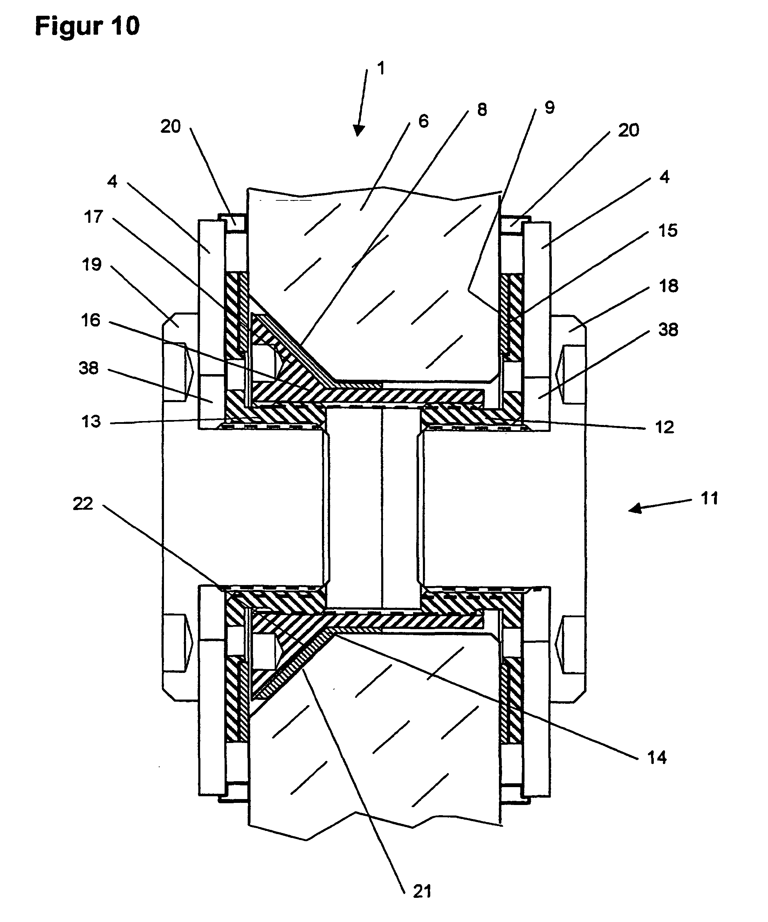

Das Ausführungsbeispiel in **Figur 10** zeigt ebenfalls die Befestigung eines Beschlagteils 4 an einem Einscheibenglaselement 1, wobei die Glasscheibe 6 hier stärker ausgebildet ist als die Glasscheibe des vorangehend beschriebenen Ausführungsbeispiels. Dementsprechend ist auch die Gewindehülse 16 gegenüber dem vorangehenden Ausführungsbeispiel abgewandelt und wird in **Figur 14** näher beschrieben.

In den **Figuren 11** bis **14** werden die bereits in den Figuren 6 bis 10 im eingebauten Zustand gezeigten Gewindehülsen 16 separat beschrieben. Die Gewindehülse 16 weist einen zylindrischen Bereich 39 auf, an welchen sich ein kegelstumpfförmiger Befestigungsbund 17 mit kegelstumpfförmiger Außenfläche 22 anschließt. Bei der Verwendung der Gewindehülse 16 in Verbundsicherheitsglasscheiben schließt sich an den Befestigungsbund 17 ein zylindrischer Distanzbund 25 an. In Befestigungsbund 17 bzw. im Distanzbund 25 sind Angriffspunkte 27, vorzugsweise als Löcher ausgebildet, für ein Montagewerkzeug angeordnet. An der Innenwandung ihrer Durchgangsbohrung weist die Gewindehülse 16 ein Innengewinde 26 auf; dieses kann durchgehend oder nur in den Endbereichen der Gewindehülse 16 angeordnet sein.

Die Gewindehülsen gemäß **Figur 11** und **12** sind zur Verwendung bei Verbundsicherheitsglaselementen vorgesehen. Bei der in **Figur 11** gezeigten Gewindehülse 16 ist der Distanzbund 25 etwa so lang ausgebildet wie Befestigungsbund 17 und zylindrischer Bereich 39 zusammen; diese Gewindehülse 16 ist zur Verwendung bei Verbundsicherheitsglaselementen bestehend aus zwei etwa oder genau gleich starken Scheiben vorgesehen. Weist das Verbundsicherheitsglaselement zwei Scheiben unterschiedlicher Stärke auf, so ist die Verwendung der Gewindehülse 16 gemäß **Figur 12** vorgesehen. Da es sinnvoll ist, dass die stärkere Scheibe die tragende Scheibe darstellt, weist diese Gewindehülse 16 entsprechend dem Stärkenverhältnis der Scheiben einen kürzeren Distanzbund 25 und einen längeren zylindrischem Bereich 39 auf.

Die **Figuren 13** und **14** zeigen Gewindehülsen 16 zur Verwendung bei Einscheibenglaselementen. Dementsprechend weisen diese Gewindehülsen 16 keinen Distanzbund auf. Die Länge des zylindrischen Bereichs 39 richtet sich nach der Stärke der Glasscheibe. Während die Gewindehülse gemäß **Figur 13** zur Verwendung bei einer Scheibe relativ geringer Stärke vorgesehen ist, ist bei der in **Figur 14** gezeigten Gewindehülse 16 der zylindrische Bereich länger ausgebildet, so dass eine Verwendung bei relativ starken Scheiben möglich ist.

Für alle in den **Figuren 11** bis **14** dargestellten Gewindehülsen 16 gilt, dass bei jeder gezeigten Gewindehülse die Stärke des Glaselements in gewissem Maße variieren kann; dies ist abhängig von der Ausgestaltung der weiteren Komponenten, insbesondere von der Länge des Außengewindes der nachfolgend beschriebenen Schraubflansche.

Alternativ sind auch weitere, hier nicht dargestellte Ausführungsformen der Gewindehülse 16 möglich. Beispielsweise ist eine durchgehend zylindrische Ausbildung der Gewindehülse ohne Befestigungsbund denkbar, wobei die tragende Scheibe des Glaselements direkt zwischen den in die Gewindehülse einzuschraubenden Schraubflanschen geklemmt wird.

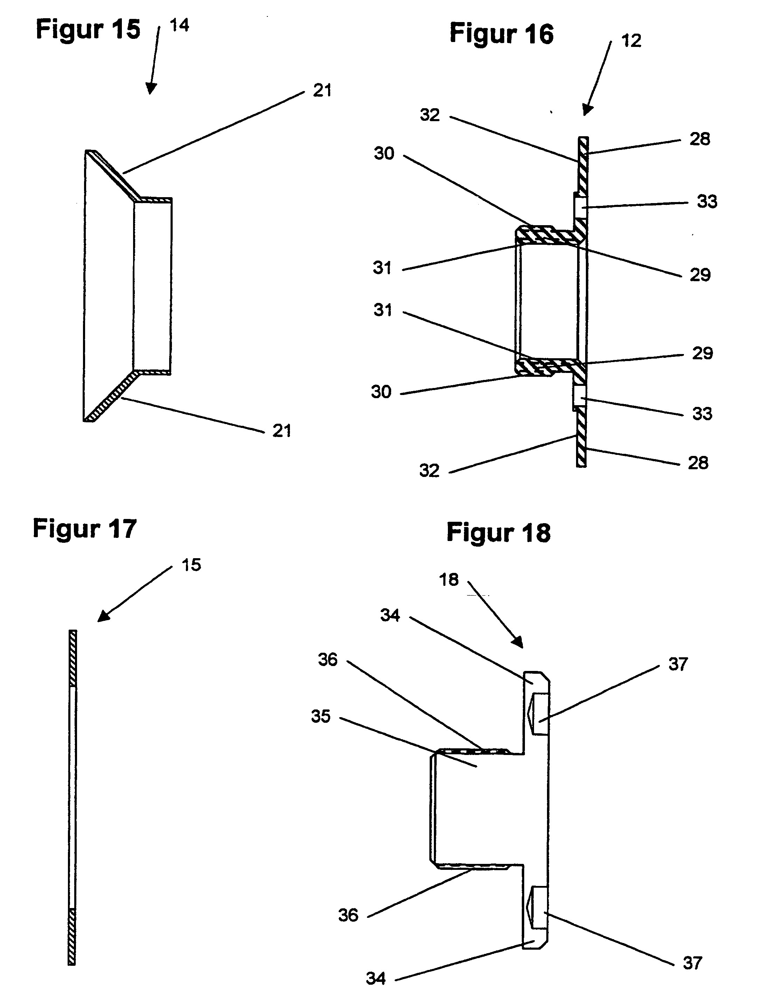

**Figur 15** zeigt die bereits in den Figuren 6 bis 10 im eingebauten Zustand dargestellte Formbuchse 14 in Einzeldarstellung. Die Formbuchse weist einen zylindrischen und einen sich daran anschließenden kegelstumpfförmigen Bereich auf. Der Innendurchmesser des zylindrischen Bereichs der Formbuchse 14 ist gleich dem Außendurchmesser des zylindrischen Bereichs der zuvor beschriebenen Gewindehülsen, und der Außendurchmesser des zylindrischen Bereichs der Formbuchse ist etwas kleiner oder gleich dem Innendurchmesser des zylindrischen Bereichs der Ausnehmung der tragenden Scheibe des Glaselements. Der kegelstumpfförmige Bereich der Formbuchse 14 ist so ausgebildet, dass die Formbuchse 14 formschlüssig auf die Gewindehülse 16 aufschiebbar ist, d.h. dass die Innenfläche des kegelstumpfförmigen Bereichs der Formbuchse 14 formschlüssig an der Außenfläche des kegelstumpfförmigen Bereichs der Gewindehülse anliegt. Die kegelstumpfförmige Außenfläche der Formbuchse 14 liegt nach der Montage im Glaselement formschlüssig an der als Senkbohrung ausgebildeten Angriffsfläche der tragenden Scheibe des Glaselements an.

Die Formbuchse 14 ist aus einem relativ unelastischen Material, z.B. Kunststoff, ausgebildet, wobei das Material die korrespondierende Fläche der tragenden Scheibe des Glaselements auch bei Druckbelastung durch Verspannung nicht beschädigt.

Da die Außenfläche des zylindrischen Bereichs der Formbuchse 14 durch die oben beschriebene Zentriereigenschaft der kegelstumpfförmigen Flächen nicht zur Herstellung eines Kraftschlusses zwischen Formbuchse 14 und der tragenden Scheibe des Glaselements benötigt wird, kann der zylindrische Bereich der Formbuchse 14 relativ kurz ausgeführt werden; die Formbuchse 14 ist in der gezeigten Form daher für alle Ausgestaltungen der Gewindehülse und damit für Glaselemente unterschiedlicher Ausführung und Stärke universell verwendbar.

In **Figur 16** erfolgt die separate Darstellung des bereits in den Figuren 6 bis 10 im eingebauten Zustand gezeigten ersten Schraubflansches 12, wobei der dort ebenfalls gezeigte zweite Schraubflansch 13 identisch wie der erste Schraubflansch 12 ausgebildet ist. Der Schraubflansch 12, 13 weist einen zylindrischen Bereich 29 und einen sich daran anschließenden scheibenförmigen Bereich 28 auf. An der Innenwandung seiner Durchgangsbohrung weist der Schraubflansch 12, 13 ein Innengewinde 31 auf. Der zylindrische Bereich 29 des Schraubflansches 12, 13 weist ein Außengewinde 30 auf, welches mit dem Innengewinde der zuvor beschriebenen Gewindehülse korrespondiert. Der scheibenförmige Bereich 28 des Schraubflansches 12, 13 weist zum zylindrischen Bereich 29 gewandt eine ringförmige Aussparung auf. Diese Aussparung dient als Anlagefläche 32 für die nachfolgend beschriebene Andrückscheibe. Zwei im scheibenförmigen Bereich 28 des Schraubflansches 12, 13 angeordnete Bohrungen dienen als Angriffspunkte 33 für ein Montagewerkzeug.

Die Länge des zylindrischen Bereichs 29 des Schraubflansches 12, 13 wird so gewählt, dass bei Verwendung einer relativ schmalen Gewindehülse (d.h. bei Verwendung in einem Einscheibenglaselement relativ geringer Stärke) die gegenüberliegend in die Gewindehülse einzuschraubenden Schraubflansche 12, 13 mit ihren einander zugewandten Stirnseiten nicht aneinanderstoßen. Die Länge des auf dem zylindrischen Bereich 29 des Schraubflansches 12, 13 befindlichen Außengewindes 30 definiert den Verstellbereich des Schraubflansches 12, 13 innerhalb der Gewindehülse bei Variation der Stärke des Glaselements. Der Schraubflansch 12, 13 ist in der gezeigten Form daher für alle Ausgestaltungen der Gewindehülse und damit für Glaselemente unterschiedlicher Ausführung und Stärke universell verwendbar.

Die in **Figur 17** gezeigte Andrückscheibe 15, die bereits in den Figuren 6 bis 10 im eingebauten Zustand dargestellt worden ist, ist scheibenringförmig ausgebildet, wobei ihr Innendurchmesser dem Durchmesser der korrespondierenden Aussparung des scheibenförmigen Bereiches des Schraubflansches entspricht. Der Außendurchmesser der Andrückscheibe ist gleich dem Außendurchmesser des scheibenförmigen Bereiches des Schraubflansches, d.h. die Andrückscheibe 15 wird im montierten Zustand vom Schraubflansch vollständig verdeckt.

Die Andrückscheibe 15 ist aus einem relativ unelastischen Material, z.B. Kunststoff, ausgebildet, wobei das Material die korrespondierende Fläche der tragenden Scheibe des Glaselements auch bei Druckbelastung durch Verspannung nicht beschädigt.

Die Andrückscheibe 15 ist in der gezeigten Form für alle Ausgestaltungen der Gewindehülse und damit für Glaselemente unterschiedlicher Ausführung und Stärke universell verwendbar.

Die bereits in den Figuren 8 bis 10 im eingebauten Zustand gezeigte Befestigungsschraube 18, welche identisch mit der ebendort gezeigten Befestigungsschraube 19 ausgebildet ist, wird in **Figur 18** separat dargestellt. Die Befestigungsschraube 18, 19 weist einen zylindrischen Bereich 35 und einen sich daran anschließenden scheibenförmigen Bereich 34 auf. Die Außenfläche des zylindrischen Bereichs 35 ist mit einem Außengewinde 36 versehen, welches mit dem Innengewinde des zuvor beschriebenen Schraubflansches korrespondiert. An der dem zylindrischen Bereich 35 abgewandten Stirnseite sind im scheibenförmigen Bereich 34 zwei Löcher angeordnet, welche als Angriffspunkte 37 für ein Montagewerkzeug vorgesehen sind.

Die Länge des zylindrischen Bereichs 35 der Befestigungsschraube 18, 19 wird so gewählt, dass bei Verwendung einer relativ schmalen Gewindehülse (d.h. bei Verwendung in einem Einscheibenglaselement relativ geringer Stärke) und gleichzeitigem Einbau die gegenüberliegend in die Schraubflansche einzuschraubenden Befestigungsschrauben 18, 19 mit ihren einander zugewandten Stirnseiten nicht aneinanderstoßen. Die Länge des auf dem zylindrischen Bereich 35 der Befestigungsschraube 18, 19 befindlichen Außengewindes 36 definiert den Verstellbereich der Befestigungsschraube 18, 19 innerhalb des Schraubflansches bei Variation der Stärke des zu montierenden Beschlagteils.

Die Befestigungsschraube 18, 19 ist somit in der gezeigten Form für alle Ausgestaltungen der Gewindehülse und damit für Glaselemente unterschiedlicher Ausführung und Stärke universell verwendbar.

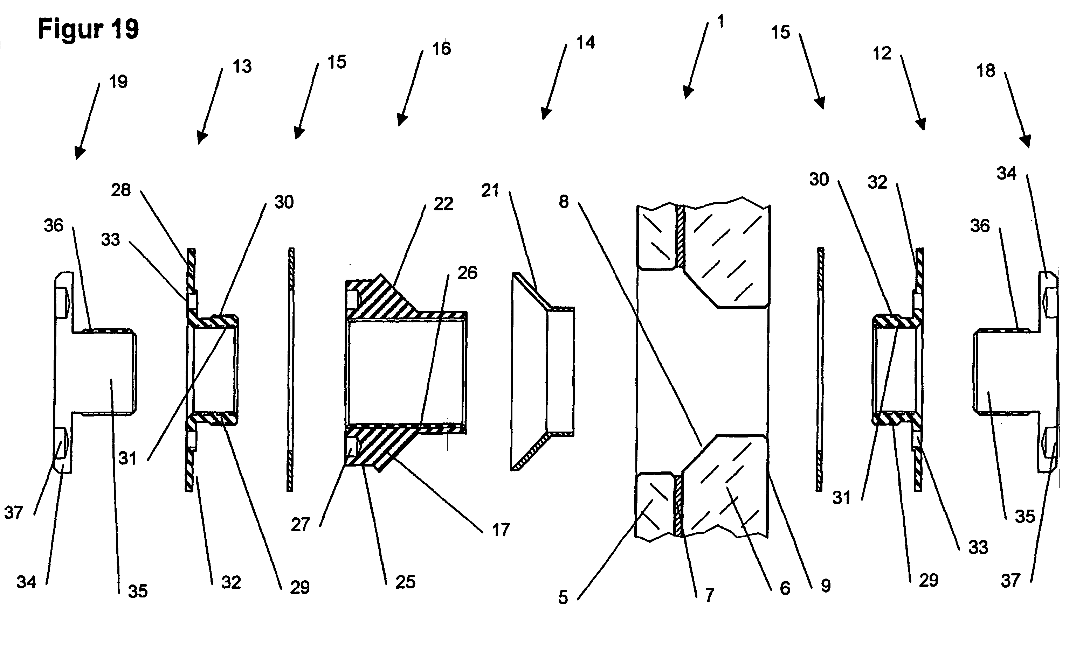

**Figur 19** zeigt eine zerlegte Anordnung der Komponenten des Ausführungsbeispiels gemäß Figur 8 unter Verwendung der Komponenten, die vorangehend in den Figuren 12, 15, 16, 17 und 18 beschrieben worden sind. D.h. ein Zusammensetzen dieser Komponenten in der vorgegebenen Aufeinanderfolge (und zusätzlich des hier nicht dargestellten Beschlagteils mit Dichtung) ergibt das Ausführungsbeispiel, welches in Figur 8 bereits beschrieben wurde.

Für alle gezeigten Ausführungsbeispiele gilt, dass der Beschlag modular aufgebaut ist, so dass viele der Komponenten bei verschiedenen Anwendungen eingesetzt werden können, d.h. bei Glaselementen 1 mit einer oder mehreren Scheiben 5, 6 mit Folienbeschichtung 7 oder bei Glaselementen 1 mit einer oder mehreren Scheiben 5, 6 ohne Folienbeschichtung oder bei Glaselementen 1 mit mindestens zwei Scheiben 5, 6 mit zwischengeschalteter elastischer Folie 7. Ebenso können einige der Komponenten unverändert bei unterschiedlich starken Glaselementen 1 verwendet werden.

### Liste der Bezugszeichen

- 1: Glaselement
- 1a: Glaselement
- 1b: Glaselement
- 2: Freiraum
- 3: Befestigungseinrichtung
- 4: Beschlagteil
- 4a: Beschlagteil
- 4b: Beschlagteil
- 4c: Beschlagteil
- 5: Glasscheibe (nichttragend)
- 6: Glasscheibe (tragend)
- 7: elastische Folie
- 8: erste Angriffsfläche (folienseitig)
- 9: zweite Angriffsfläche
- 10: Aussparung als Bohrung
- 11: Befestigungsinsel
- 12: erster Schraubflansch
- 13: zweiter Schraubflansch
- 14: Formbuchse
- 15: Andrückscheibe
- 16: Gewindehülse
- 17: Befestigungsbund
- 18: erste Befestigungsschraube
- 19: zweite Befestigungsschraube
- 20: Dichtung
- 21: kegelstumpfförmige Innenfläche
- 22: kegelstumpfförmige Außenfläche
- 23: Türlager (oben)
- 24: Türlager (unten)
- 25: Distanzbund
- 26: Innengewinde
- 27: Angriffspunkt
- 28: scheibenförmiger Bereich
- 29: zylindrischer Bereich
- 30: Außengewinde
- 31: Innengewinde
- 32: Anlagefläche
- 33: Angriffspunkt
- 34: scheibenförmiger Bereich
- 35: zylindrischer Bereich
- 36: Außengewinde
- 37: Angriffspunkt
- 38: Bohrung
- 39: zylindrischer Bereich

## Patentansprüche

1. Glaselement mit einem Beschlag, wobei das Glaselement (1) vorzugsweise ein rahmenloses Glaselement ist, z.B. ein bewegter Flügel oder ein Festfeldflügel einer Türantage. Fensteranlage, Fassadenwand oder Trennwand, wobei das Glaselement (1) mindestens eine mit einer elastischen Folie beschichtete Glasscheibe oder mindestens zwei Glasscheiben, die über mindestens eine zwischengeschaltete elastische Folie miteinander verbunden sind, aufweist,
wobei der Beschlag (4) aus mehreren Beschlagteilen (4a, 4b, 4c) bestehen kann und eine Befestigungseinrichtung (3) aufweist, um das Glaselement (1) feststehend oder beweglich mit einem anderen Bauteil, z.B. mit einem anderen Glaselement oder mit dem Boden oder mit der Wand zu verbinden,
wobei die Befestigungseinrichtung (3) eine oder mehrere Befestigungsinseln (11) aufweist, und wobei die Befestigungsinsel (11) jeweils in einer Aussparung (10) des Glaselements (1) angeordnet ist,
**dadurch gekennzeichnet,**
**dass** die Befestigungseinrichtung-(3) an am Glaselement (1) an gegenüberliegenden Seiten ausgebildeten Angriffsflächen (8, 9) angreift, welche frei von elastischer Folie (7) ausgebildet sind,
**dass** jede Befestigungsinsel (11) zwei Schraubflansche (12, 13) aufweist, die mittelbar oder unmittelbar miteinander verbunden sind, wobei der zylindrische Bereich (29) der Schraubflansche (12, 13) in die Aussparung (10) des Glaselements (1) eingreift,
und wobei der scheibenförmige Bereich (28) der Schraubflansche (12, 13) auf die Angriffsflächen (8,9) einwirkt, und dass der Schraubflansch (12, 13) mit einem zentral angeordneten Innengewinde versehen ist, in das je eine Befestigungsschraube (18, 19) für das Beschlagteil eingreift.

2. Glaselement nach Anspruch 1,
**dadurch gekennzeichnet, dass** die Befestigungsinsel (11) identisch ausgebildete Schraubflansche (12, 13) aufweist.

3. Glaselement nach einem der vorangehenden Ansprüche,
**dadurch gekennzeichnet, dass** die Angriffsflächen (8, 9) an gegenüberliegenden Seiten der Glasscheibe (5, 6) ausgebildet sind, indem sie als mindestens zwei zur Glasfläche plane Angriffsflächen (8, 9) oder als zwei zur Glasfläche schräge Angriffsflächen (8, 9) oder als eine zur Glasfläche plane und eine zur Glasfläche schräge Angriffsfläche (8, 9) ausgebildet sind.

4. Glaselement nach einem der vorangehenden Ansprüche,
**dadurch gekennzeichnet, dass** die Befestigungseinrichtung (3) zu den Angriffsflächen (8, 9) komplementäre Befestigungsflächen aufweist, welche über eine Spanneinrichtung (13, 16) zueinander verspannbar sind.

5. Glaselement nach einem der vorangehenden Ansprüche,
**dadurch gekennzeichnet, dass** bei einem Glaselement (1) aus mehreren Glasscheiben (5, 6) mit mindestens einer zwischengeschalteten elastischen Folie (7) an nur einer Glasscheibe (5, 6) mindestens zwei Angriffsflächen (8, 9) oder an mehreren Glasscheiben (5, 6) jeweils mindestens zwei Angriffsflächen (8, 9) ausgebildet sind.

6. Glaselement nach Anspruch 1,
**dadurch gekennzeichnet, dass** der Schraubflansch (12, 13) einen scheibenförmigen Bereich (28) aufweist, wobei der scheibenförmige Bereich (28) des Schraubflansches (12, 13) eine Anlagefläche (32) für eine Scheibe (5, 6) des Glaselements (1) und/oder für ein Beschlagteil (4) aufweist.

7. Glaselement nach Anspruch 6,
**dadurch gekennzeichnet, dass** der scheibenförmige Bereich (28) des Schraubflansches (12, 13) vorzugsweise durch Bohrungen gebildete Angriffspunkte (33) für ein Montagewerkzeug aufweist.

8. Glaselement nach Anspruch 7,
**dadurch gekennzeichnet, dass** die Befestigungsinsel (11) eine Gewindehülse (16) aufweist, die mit einem eine Andrückfläche (22) bildenden Befestigungsbund (17) versehen ist, wobei der Befestigungsbund (17) der Gewindehülse (16) der Form der Angriffsfläche (8) der Glasscheibe (5, 6) angepasst ist.

9. Glaselement nach Anspruch 8,
**dadurch gekennzeichnet, dass** die Gewindehülse (16) zumindest in ihren stirnseitigen Endbereichen jeweils ein Gewinde, vorzugsweise Innengewinde (26) aufweist, mit welchem der Schraubflansch (12, 13) verschraubbar ist.

10. Glaselement nach Anspruch 8,
**dadurch gekennzeichnet, dass** die Gewindehülse (16) zumindest an einer Stimseite gebildete Angriffspunkte (27) für ein Montagewerkzeug aufweist.

11. Glaselement nach den Ansprüchen 6 bis 10,
**dadurch gekennzeichnet, dass** zwischen den Angriffsflächen (8, 9) der Glasscheiben (5, 6) und den diesen Angriffsflächen angepassten Flächen der Gewindehülse (16) eine Formbuchse (14) angeordnet ist und zwischen den Angriffsflächen (8, 9) der Glasscheiben (5, 6) und den diesen Angriffsflächen angepassten Flächen der Schraubflansche (12, 13) Andrückscheiben (15) angeordnet sind.

12. Glaselement nach Anspruch 11,
**dadurch gekennzeichnet, dass** die Formbuchse (14) und/oder die Andrückscheibe (15) aus einem harten Werkstoff, vorzugsweise einem harten Kunststoff besteht.

13. Glaselement nach Anspruch 1,
**dadurch gekennzeichnet, dass** die Befestigungsschraube (18, 19) einen scheibenförmigen Bereich (34) und einen zylindrischen Bereich (35) aufweist, wobei die Befestigungsschraube (18, 19) in ihrem zylindrischen Bereich (35) ein Außengewinde (36) aufweist, welches in das Innengewinde (31) des Schraubflansches (12, 13) eingreift.

14. Glaselement nach Anspruch 13,
**dadurch gekennzeichnet, dass** die Befestigungsschraube (18, 19) in ihrem scheibenförmigen Bereich (34) gebildete Angriffspunkte (37) für ein Montagewerkzeug aufweist.

15. Glaselement nach Anspruch 13,
**dadurch gekennzeichnet, dass** das Beschlagteil (4) im Bereich der Befestigungsinsel (11) eine gegenüber dem Gewindeaußendurchmesser-der Befestigungsschraube (18, 19) größere Bohrung (38) aufweist, wodurch ein Toleranzausgleich und eine Justiermöglichkeit für das Beschlagteil (4) gebildet ist.

16. Glaselement nach einem der Ansprüche 13 oder 15,
**dadurch gekennzeichnet, dass** zwischen dem Beschlagteil (4) und dem Glaselement (1) eine Dichtung (20) angeordnet ist.

## Claims

1. Glazing element with a fitting, the glazing element (1) preferably being a frameless glazing element, for example a moving panel or a fixed panel of a door system, window system, facade wall or partition wall, wherein the glazing element (1) comprises at least one glass pane coated with an elastic film or at least two glass panes which are interconnected by means of at least one interposed elastic film, wherein the fitting (4) may consist of a plurality of fitting parts (4a, 4b, 4c) and comprises a fastening means (3) in order to connect the glazing element (1) in a fixed or movable manner to another structural part, for example to another glazing element or to the floor or to the wall, wherein the fastening means (3) comprises one or more point fasteners (11), and wherein the point fastener (11) is in each case arranged in a cutout (10) of the glazing element (1) **characterized in that** the fastening means (3) acts on engagement surfaces (8, 9) formed on opposite sides of the glazing element (1), these engagement surfaces being designed to be free of elastic film (7), **in that** each point fastener (11) comprises two screw flanges (12, 13) which are connected directly or indirectly to one another, the cylindrical region (29) of the screw flanges (12, 13) engaging into the cutout (12) of the glazing element (1), and the disc -shaped region (28) of the screw flanges (12, 13) acting on the engagement surfaces (8, 9), and **in that** the screw flange (12, 13) is provided with a centrally arranged internal thread into which a respective fastening screw (18, 19) for the fitting part engages.

2. Glazing element according to Claim 1, **characterized in that** the point fastener (11) comprises identically formed screw flanges (12, 13).

3. Glazing element according to one of the preceding claims, **characterized in that** the engagement surfaces (8, 9) are formed on opposite sides of the glass pane (5, 6) by being formed as at least two engagement surfaces (8, 9) with a pl anar orientation with respect to the glass surface or as two engagement surfaces (8, 9) with an oblique orientation with respect to the glass surface or as engagement surfaces (8, 9) in which one has a planar orientation with respect to the glass surface and one has an oblique orientation with respect to the glass surface.

4. Glazing element according to one of the preceding claims, **characterized in that** the fastening means (3) has fastening surfaces complementary to the engagement surfaces (8, 9), which c an be clamped relative to one another by means of a clamping device (13, 16).

5. Glazing element according to one of the preceding claims, **characterized in that**, in a glazing element (1) composed of a plurality of glass panes (5, 6) with at least one interposed elastic film (7), at least two engagement surfaces (8, 9) are formed on only one glass pane (5, 6) or at least two engagement surfaces (8, 9) are formed on each of a plurality of glass panes (5, 6) .

6. Glazing element according to Claim 1, **characterized in that** the screw flange (12, 13) has a disc-shaped region (28), the disc-shaped region (28) of the screw flange (12, 13) having a bearing surface (32) for a pane (5, 6) of the glazing element (1) and/or for a fitting part (4).

7. Glazing element ac cording to Claim 6, **characterized in that** the disc -shaped region (28) of the screw flange (12, 13) has engagement points (33) for an assembly tool which are preferably formed by bores.

8. Glazing element according to Claim 7, **characterized in that** the point fastener (11) comprises a threaded sleeve (16) which is provided with a fastening collar (17) forming a pressing surface (22), the fastening collar (17) of the thread sleeve (16) being adapted to the shape of the engagement surface (8) of the glass pane (5, 6).

9. Glazing element according to Claim 8, **characterized in that** the threaded sleeve (16) comprises, at least at its end -face regions, a respective thread, preferably an internal thread (26), to which the screw flange (12, 13) can be screwed.

10. Glazing element according to Claim 8, **characterized in that** the threaded sleeve (16) has engagement points (27) for an assembly tool which are formed at least on one end face.

11. Glazing element according to Claims 6 to 10, **characterized in that** a shaped bushing (14) is arranged between the engagement surfaces (8, 9) of the glass panes (5, 6) and the surfaces of the threaded sleeve (16) which are adapted to these engagement surfaces, and press washers (15) are arranged between the engagement surfaces (8, 9) of the glass panes (5, 6) and the surfaces of the screw flanges (12, 13) which are adapted to these engagement surfaces.

12. Glazing element according to Claim 11, **characterized in that** the shaped bushing (14) and/or the press washer (15) consists of a hard material, preferably a hard plastic.

13. Glazing element according to Claim 1, **characterized in that** the fastening screw (18, 19) has a disc -shaped region (34) and a cylindrical region (35), the fastening screw (18, 19) having in its cylindrical region (35) an external thread (36) which engages in the internal thread (31) of the screw flange (12, 13).

14. Glazing element according to Claim 13, **characterized in that** the fastening screw (18, 19) has engagement points (37) for an assembly tool which are formed in its disc-shaped region (34).

15. Glazing element according to Claim 13, **characterized in that** the fitting part (4) has, in the region of the points fastener (11), a bore (38) which is larger than the outside thread diameter of the fastening screw (18, 19), thereby providing tolerance compensation and an adjustment possibility for the fitting part (4).

16. Glazing element according to either of Claims 13 and 15, **characterized in that** a seal (20) is arranged between the fitting part (4) and the g lazing element (1).

## Revendications

1. Elément en verre doté d'une ferrure, l'élément en verre (1) étant de préférence un élément en verre sans encadrement, par exemple un panneau mobile ou un panneau fixe d'une installation de porte, d'une installation de fenêtre, d'un mur d e façade ou d'une paroi de séparation,
l'élément en verre (1) présentant au moins une vitre revêtue d'un film élastique ou au moins deux vitres qui sont reliées l'une à l'autre par au moins un film élastique interposé entre elles,
la ferrure (4) pouvant être constituée de plusieurs pièces de ferrure (4a, 4b, 4c) et présentant un dispositif de fixation (3) qui relie l'élément en verre (1) de manière fixe ou mobile à un autre composant, par exemple à un autre élément en verre, au sol ou à la paroi,
le disposi tif de fixation (3) présentant un ou plusieurs îlots de fixation (11), les îlots de fixation (11) étant tous disposés dans une découpe (10) respective ménagée dans l'élément en verre (1),
**caractérisé en ce que** le dispositif de fixation (3) s'engage sur des surfaces d'engagement (8, 9) formées sur les côtés opposés de l'élément en verre (1) et réalisées sans film élastique (7),
**en ce que** chaque îlot de fixation (11) présente deux brides filetées (12, 13) qui sont reliées l'une à l'autre directement ou indirectement, la partie cylindrique (29) de la bride filetée (12, 13) s'engageant dans la découpe (10) ménagée dans l'élément en verre (1), la partie (28) en forme de plaque de la bride filetée (12, 13) agissant sur la surface d'engagement (8, 9),
et **en ce que** la bride filetée (12, 13) est dotée d'un filet intérieur disposé en son centre et dans lequel s'engage une vis de fixation (18, 19) de la pièce de ferrure.

2. Elément en verre selon la revendication 1,
**caractérisé en ce que** l'îlot de fixation (11) présen te des brides filetées (12, 13) de configuration identique.

3. Elément en verre selon l'une des revendications précédentes, **caractérisé en ce que** les surfaces d'engagement (8, 9) sont réalisées sur les côtés opposés de la vitre (5, 6) en étant réalisées sous la forme d'au moins deux surfaces d'engagement (8, 9) parallèles à la surface de verre ou de deux surfaces d'engagement (8, 9) obliques par rapport à la surface du verre ou comme surfaces d'engagement (8, 9) dont l'une est parallèle à la surface du ver re et l'autre oblique par rapport à la surface du verre.

4. Elément en verre selon l'une des revendications précédentes, **caractérisé en ce que** le dispositif de fixation (3) présente des surfaces de fixation complémentaires des surfaces d'engagement (8, 9) et qui peuvent être serrées l'une contre l'autre par un dispositif de serrage (13, 16).

5. Elément en verre selon l'une des revendications précédentes, **caractérisé en ce que** lorsque l'élément en verre (1) est constitué de plusieurs vitres (5, 6) avec au moins un film élastique (7) intercalé entre elles, au moins deux surfaces d'engagement (8, 9) sont formées sur une seule vitre (5, 6) ou, lorsqu'il y a plusieurs vitres en verre (5, 6), au moins deux surfaces d'engagement (8, 9) sont formées pour chacune d'entre elles.

6. Elément en verre selon la revendication 1,
**caractérisé en ce que** la bride filetée (12, 13) présente une partie (28) en forme de plaque, la partie (28) en forme de plaque de la bride filetée (12, 13) présentant une surface de pose (32) pou r une vitre (5, 6) de l'élément en verre (1) et/ou pour une pièce de ferrure (4).

7. Elément en verre selon la revendication 6,
**caractérisé en ce que** la partie (28) en forme de plaque de la bride filetée (12, 13) présente des points d'engagement (33) pour un outil de montage qui sont formés de préférence par des alésages.

8. Elément en verre selon la revendication 7,
**caractérisé en ce que** l'îlot de fixation (11) présente une douille filetée (16) qui est dotée d'un collet de fixation (17) qui forme une surface de poussée (22), le collet de fixation (17) de la douille filetée (16) étant adaptée à la forme de la surface d'engagement (8) des vitres (5, 6).

9. Elément en verre selon la revendication 8,
**caractérisé en ce que** la douille filetée (16) présente au moins dans chacune de ses parties d'extrémité frontale un filet et de préférence un filet intérieur (26) sur lequel la bride filetée (12, 13) peut être vissée.

10. Elément en verre selon la revendication 8,
**caractérisé en ce que** la douille filetée (16) présente sur un côté frontal au moins un point d'engagement (27) pour un outil de montage.

11. Elément en verre selon les revendications 6 à 10,
**caractérisé en ce qu'**entre les surfaces d'engagement (8, 9) des vitres (5, 6) et les surfaces de la douille filetée (16) adaptée à ces surfaces d'engagement est disposé un boîtier façonné (14), des plaques de poussée (15) étant disposées entre les surfaces d'engagement (8, 9) des vitres (5, 6) et les surfaces des brides filetées (12, 13) adaptées à ces surfaces d'engagement.

12. Elément en verre selon la revendication 11,
**caractérisé en ce que** le boîtier façonné (14) et/ou la plaque de poussée (15) sont réalisés en un matériau dur, de préférence un matériau synthétique dur.

13. Elément en verre selon la revendicati on 1,
**caractérisé en ce que** la vis de fixation (18, 19) présente une partie (34) en forme de plaque et une partie cylindrique (35), la vis de fixation (18, 19) présentant dans sa partie cylindrique (35) un filet extérieur (36) qui s'engage dans le filet in térieur (31) de la bride filetée (12, 13).

14. Elément en verre selon la revendication 13,
**caractérisé en ce que** dans sa partie (34) en forme de plaque, la vis de fixation (18, 19) présente des points d'engagement (37) prévus pour un outil de montage.

15. Elément en verre selon la revendication 13,
**caractérisé en ce que** dans la zone de l'îlot de fixation (11), la pièce de ferrure (4) présente un alésage (38) plus grand que le diamètre extérieur du filet de la vis de fixation (18, 19), ce qui permet de compenser les tolérances et d'ajuster la pièce de ferrure (4).

16. Elément en verre selon l'une des revendications 13 ou 15, **caractérisé en ce qu'**un joint d'étanchéité (20) est disposé entre la pièce de ferrure (4) et l'élément en verre (1).
